# EUROPEAN PATENT SPECIFICATION

(11) **EP 1 546 064 B1**
(45) Date of publication and mention of the grant of the patent: **15.01.2014**
(21) Application number: 03750675.5
(22) Date of filing: 01.10.2003
(51) Int. Cl.: C04B 41/89, C04B 41/83

(54) **METHOD FOR THE DECORATION OF POROUS CERAMIC MATERIALS AND IN PARTICULAR POLISHED PORCELAIN STONEWARE**
VERFAHREN ZUM DEKORIEREN VON PORÖSEN KERAMISCHEN MATERIALIEN UND INSBESONDERE VON PORZELLANARTIGEM STEINZEUG
PROCEDE POUR LA DECORATION DE MATERIAUX CERAMIQUES POREUX, NOTAMMENT DU GRES PORCELAINE POLI

(30) Priority: 01.10.2002 IT MI20022072
(43) Date of publication of application: 29.06.2005
(73) Proprietor: Lafabrica S.R.L., 40011 ANZOLA DELL'EMILIA (Province of Bologna) (IT)
(72) Inventor: MAZZANTI, Raffaello, I-40067 Rastignano (IT)
(74) Representative: Finetti, Claudia
(86) International application number: PCT/EP2003/010927
(87) International publication number: WO 2004/031103

(56) References cited:
- EP-A- 0 393 525
- DD-A- 133 557
- DE-A- 10 018 645
- DATABASE WPI Section Ch, Week 197905 Derwent Publications Ltd., London, GB; Class A32, AN 1979-08989B XP002263589 & JP 53 145820 A (WASHIMI M), 19 December 1978 (1978-12-19)
- DATABASE WPI Section Ch, Week 198521 Derwent Publications Ltd., London, GB; Class A97, AN 1985-126613 XP002263590 & JP 60 065783 A (NIPPON KOSHITSU TOK), 15 April 1985 (1985-04-15)

## Description

The present invention relates to a method for the decoration of porous ceramic materials and in particular polished porcelain stoneware.

It should be noted that the term "to polish" as used in the description of the invention, indicates a surface treatment that includes polishing, smoothing, lapping, brushing and the like.

In particular, the present invention relates to a method for applying a decoration with a high aesthetic content of ceramic materials having surface porosity.

Ceramic materials for lining or flooring are currently decorated with numerous techniques to obtain materials of a highly aesthetic value.

The decoration is normally effected on dried or toasted supports, which usually comprise a final baking.

In particular, it is known that in the case of polished porcelain stoneware, a material which is widely used for its mechanical and aesthetic characteristics, various decorative types are used, such as those indicated in the monograph "Gres Fine Porcellanato" (Porcelain Stoneware) published by SACMI.

It is known that a traditional fired decoration is capable of producing materials with good aesthetic properties, thus satisfying market demands.

It has been observed, however, that fired decoration is not a flexible technology, which does not allow the production of small lots and only exploits the use of inorganic pigments which considerably limit the range of colors which can be obtained.

At present, if a personalized decoration is desired, resort must be made to a third firing which consists in decorating an already baked material.

It has been found that although this technique allows the production of small lots also with wider chromatic ranges, the decorated products obtained are less resistant with respect to decorations effected on line. Furthermore, third firing decoration is limited by the fact that it can almost exclusively be affected on lining materials, whereas flooring materials are decorated on line before baking.

Current market demands are becoming increasingly more oriented towards personalized materials with a high aesthetic content. In particular, in the case of commercial building, the possibility of obtaining particular effects exceeds the necessity of long-lasting materials.

These demands consequently require a new technology, which is suitable for the decoration of lining or flooring ceramic materials.

In the state of the art several methods are known for manufacturing decorated ceramic materials. JP 53145820A discloses a process for manufacturing coloured pottery comprising colouring unglazed pottery with water or oil paints and additional coating with acrylic acid or melamine-alkyd resin and baking. JP 60065783A discloses a method of screen printing on tiles using a coating material containing an inorganic pigment and a UV settable resin. The printed coating is hardened by irradiation of UV rays. DD 133557 A discloses a method of coating ceramic substrates using a composition comprising a colorant and a resin, which can be an alkyd resin, epoxy resin or phenolic resin. EP393525 A discloses a method comprising the steps of impregnating a ceramic sintered material having continuous pores with a liquid dye-containing resin and hardening the impregnated resin.

One of the main objectives of the present invention therefore consists in supplying a method for the decoration of porous ceramic materials and in particular polished porcelain stoneware that is simple to effect and has low operating costs.
With the method according to the invention, it is possible to decorate ceramic flooring and lining materials of varying kinds and origins. These Materials may be natural or with a surface treatment such as polishing, smoothing, lapping, brushing and the like.

A further objective of the present invention consists in supplying a method for the decoration of ceramic materials, which allows the production of small lots with a wide range of chromatic variations.

Another objective of the present invention consists in producing a decorated ceramic material which cannot be easily attacked by external agents and which allows an effective and rapid removal of dirt and stains from its surface.

The present invention derives from the discovery that the surface pores of ceramic materials and polished porcelain stoneware in particular, are suitable for fixing dyes or colored pigments, when appropriately applied.

Accordingly the present invention provides a method for the coloration or decoration of porous ceramic substrates as claimed in the appended claims.

In accordance with a first aspect of the present invention, a method is provided for the decoration of a porous ceramic substrate, in particular polished porcelain stoneware, comprising:
1) The application of a dye or pigment on at least a portion of a ceramic substrate having surface microporosities, so as to allow said dye or pigment to penetrate the pores of said ceramic substrate;
2) The application of a hardenable composition on said portion of colored ceramic substrate, in order to allow said composition to penetrate the colored or pigmented pores of said ceramic substrate,
3) The polymerization or drying of said hardenable composition to fix the dye or pigment applied to the treated substrate.

The application phase 2) of the method of the invention is conveniently effected when the ceramic substrate treated according to phase 1) is dry. For example, it is possible to dry the ceramic substrate after applying the dye or pigment and/or subject it to fixing.

In accordance with a second aspect of the present invention, a method is provided for the decoration of a porous ceramic substrate, in particular polished porcelain stoneware, comprising:
1) The application of a colored hardenable formulation on at least a portion of a ceramic substrate having surface microporosities, so as to allow said formulation to penetrate the pores of said ceramic substrate. The formulation comprises a polymer/pre-polymer that can contain any type of dye/pigment suitable for providing the desired color. Such formulation can be easily recognized as ink.
2) The polymerization or drying of said hardenable composition.
The pigments or dyes used within the scope of the invention are preferably of the organic type. In particular the use of pigments is preferred as their stability to light is much higher.

According to an embodiment of the invention, the pigment or dye is associated with a suitable carrier which, when applied to the surface of the ceramic substrate ensures its penetration inside the surface porosity thereof.

The application of one or more pigments/dyes according to the present invention allows a wide range of colors to be obtained with consequent exceptional aesthetic properties of the ceramic end product.

The pigment can be conveniently used in preparation form, such as for example, pastes, dispersions, etc. The dispersions can typically contain a dispersing agent called stabilizer that can be, for example, a polyester, a polyurethane, typically incorporated in a quantity of 2.5% to 100% by weight of the pigment.

The formulation of the dye is suitably selected to allow a rapid penetration in the pores of the ceramic material to be treated and subsequent easy evaporation of the carrier, thus leaving the pigment/dye alone in the pore. The carrier used can typically be in the form of an aqueous solution, solvent or consisting of an organic resin. The pigment/dye can typically be in the form of a solution, dispersion or emulsified in the carrier. It can also be present in colloidal form or in the form of a complex.

According to an embodiment of the invention, the coloring composition can contain additives, which facilitate the dispersion of the pigment, the stability of the formulations, wettability of the substrate.

The application of the formulation containing the pigment/dye can be typically effected by resorting to techniques used in graphic arts, such as for example offset printing, flexography, screen-printing, gravure printing, digital printing, used in coating applications such as for example roll-, film-, spray-, pallet, disk-techniques by means of a brush or vacuum technology or also hand decorations with traditional techniques (brush, pad, aerograph).

Among the techniques mentioned, the digital technique in particular allows personalized images to be obtained together with high production flexibility. With this technology, various types of images can therefore be obtained, such as reproductions of images or the reproduction of natural stones.

It has been found that the high flexibility in formulating with organic pigments/dyes enables a wide range of colors with numerous shades, to be obtained. The different shades give the material effects of depth and consequently effects, which imitate natural stones and complex images, can be reproduced.

Within the scope of the invention, it is possible to use a wide variety of dyes and pigments combined with each other or alone. The pigments can have various colors, for example process colors like cyan, magenta, yellow, black or other colors like white, green, violet, brown, scarlet and mixtures of these.

Among the organic pigments which can be used within the scope of the invention, the following can be mentioned, for example, Cinquasia, Cromophtal, Irgazin, Irgalite (Ciba Specialty Chemicals), among the aqueous dispersions of pigments Microsol, Unisperse (Ciba Specialty Chemicals), among pigments in preparations, concentrates, dispersions, Irgalite, Microlith, Filofin, Micranyl (Ciba Specialty Chemicals).

Among inorganic pigments, the following are included: Hornatherm, Hornachrome, Horna, Irgacolor (Ciba Specialty Chemicals), titanium oxide.

Dyes that can be used are, for example, special dyes Orasol, Oracet, Filamid, Filester (Ciba Specialty Chemicals). Natural dyes such as coffee, anthocyanins, etc. can also be used.

A selection of pigments which can be used in the context of the invention is listed, for example, in the publication "Industrial Organic Pigments, Production, Properties, Application", second edition, W. Herbst, K. Hunger; VCH 1997.

In addition to the above pigments, pigments with a particular chromatic effect can be advantageously used, such as metallic, metallescent, micalized, pearlescent pigments, for example pigments supplied by Merck (IRIO-DIN), Eckart etc.

According to an embodiment of the invention, said pigment is applied in the form of dispersion in a suitable liquid such as water or an organic solvent.

With the method according to the invention, it is possible to decorate ceramic materials or substrates for various types of flooring and lining.

Particularly favorable results are obtained by treating porous ceramic substrates such as polished porcelain stoneware.

According to a preferred embodiment of the invention, said hardenable composition is a photocurable resin or composition.
The term photocuring reaction refers to the curing and hardening of the reactive component, obtained as a result of exposure to radiation preferably having a wave-length ranging from 100 to 780 nm, more preferably from 250 to 460 nm. In particular, the exposure to UV rays is particularly suitable for reaching, in a short period of time and with low costs, a high curing degree of the reactive components contained in the photocurable composition.
The reactive components can be subdivided into two main categories: the group of radicalic systems and of cationic systems.
The compounds belonging to the radicalic group contain an ethilenically unsaturated group. The compounds having an ethilenically unsaturated group may be an oligomer or a monomer. The oligomers is a compound having two or more ethilenically unsaturated group within one molecule and governing various properties of cured compound obtained by radical polymerization, such as abrasion resistance, durability, weatherability, adhesion, etc.
The monomer is further classified into a monofunctional monomer having one unsaturated group and a polyfunctional monomer having two ore more unsaturated groups.

It should be noted that the term (meth)acrylate as used in the description of the invention, indicates both acrylates and methacrylates.

Specific examples of the oligomers having an ethylenically unsaturated group for use in the present invention include an unsaturated polyesters resin (UPES) (for example Roskydal 300, 502, 700, BAYER; Alpolith 303 Hoechst; Distitron VE100, 417, 191, LONZA) an epoxy (meth)acrylate resin (for example Ebecryl 600, 3200, 3500, UCB Chemicals; CRAYNOR CN104, CN116, CN154, CN132, CN133, ATOFINA), a urethane (meth)acrylate resin (for example, Ebecryl 230, 270, 1290, 5129, UCB Chemicals; CRAYNOR CN965, CN966, CN963, CN975, ATOFINA); a polyester (meth)acrylate resin (for example Ebecryl 80, 81, 83, 84, UCB Chemicals), an amine modified polyester (meth) acrylate resin, a polyether (meth)acrylate resin (for example CRAYNOR CN501, CN502, CN551, CN552, ATOFINA), an acrylic (meth)acrylate (for example Ebecryl 745, 767, UCB Chemicals), a polybutadiene (meth)acrylate resin (for example CRAYNOR 301, 303, ATOFINA), a silicone (meth)acrylate resin, etc..

This photocurable composition advantageously includes reactive diluent (monomer) which can act both as a diluent for the viscosity control of the composition, and as a reagent which intervenes in the photocuring process, thereby improving workability, penetration into the porosities, etc.

The monofunctional monomers, which can be used within the scope of the invention include:
a) Monofunctional monomers, preferably selected from:
   - vinyls for example styrene;
   - (meth)acrylates for example Ebecryl 110, 112, 114, UCB Chemicals; SR335, SR395, SR489, SR256, SR504, SR285, SR339, SR506, ATOFINA; IBOA, ODA-N or
b) Polyfunctional monomers, selected from bifunctional, (for example Ebecryl 150, UCB Chemicals; SR238, SR268, SR272, SR306, SR508, SR259, SR344, SR610, SR9003, SR349, SR602, ATOFINA; DPGDA, HDDA, TPGDA) and others (for example Ebecryl 40, 140, 160, UCB Chemicals, SR295, SR351, SR444, SR355, SR399, SR415, SR454, SR492, SR9020, SR9021, ATOFINA; DPHPA, OTA, TMPTA).
The prepolymers which can be used, belonging to the group of cationic systems also comprise epoxy monomers and oligomers (for example CYRACURE UVR6105, UVR6110, UVR6128, UVR6000, UVR6100, UVR6216, UNION CARBIDE, limonene dioxide, linseed oil epoxide-LOE); polyols (for example TONE series 200, 300, UNION CARBIDE); epoxy silicones (for example UV 9600 series, GE Bayer Silicones); vinyl-ethers (for example RAPICURE, ISP Chemicals); glycols (for example PEG with varying molecular weights). A wide variety of commercial epoxy resins are available and listed in "Handbook of Epoxy Resins" by Lee and Neville, McGraw Hill Book Company, New York (1967).
The photocurable composition of the present invention may be a hybrid mixture containing both radicalic and cationic systems.

The formulations containing the above compounds can also be classified on the basis of the following classification:
- With solvent
- 100% photo-curable (preferred)
- Aqueous based (dispersion or emulsion).

The photocurable composition of the present invention is in the form of a solvent free material but may also be used by diluting it with a solvent as conventionally employed. In this case, the solvent used may be a solvent commonly used in conventional coating materials and examples thereof include aromatic hydrocarbons such as toluene and xylene; alcohols such as ethanol, 2-propanol and 1-butanol; ketones such as methyl ethyl ketone and methyl isobutyl ketone; ethers such as diethylene glycol dimethyl ether and triethylene glycol dimethyl ether; esters such as ethyl acetate and butyl acetate; and monoethers of ethylene glycol such as methyl cellosolve and ethyl cellosolve. These solvents may be used individually or in combination of two or more thereof. The organic solvent is used so as to reduce the viscosity of the composition and improve the workability. Moreover the photocurable composition of the present invention may be in the form of an aqueous or aqueous/solvent dispersion or emulsion.

In the formulation of the photocurable compositions of the invention there are also advantageously one or more photoinitiators, co-initiators, synergic agents.

Photoinitiators for free radical polymerization which can be used, for example, are alpha-hydroxyketones (for example IRGACURE 184, 2959, DAROCUR 1173, Ciba Specialty Chemicals; ESACURE KIP 150, LAMBERTI S.P.A.), alpha-aminoketones (for example IRGACURE 907, 369, Ciba Specialty Chemicals; ESACURE 1001 LAMBERTI SPA), acylphosphinoxides (for example IRGACURE 819, 1800, 1850, 1700, Ciba Speciality Chemicals); LUCIRIN TPO, TPO-L, BASF), thioxanthones (for example SPEEDCURE ITX, DETX, CTX, CPTX, LAMBSON), benzophenones (for example ESACURE TZT, TZM, LAMBERTI SPA; benzophenone, substituted benzophenones), oxime-esters, anthracenes, benzyl-dimethyl-ketals (for example IRGACURE 651, Ciba Specialty Chemicals; ESACURE KB1, LAMBERTI), phenyl-glyoxylates (for example Darocur MBF, Ciba Specialty Chemicals) synergic amines (for example SPEEDCURE EDB, EHA, DMB, PDA, LAMBSON), tertiary amines.
Photoinitiators for cationic polymerization include all substances, which liberate Lewis or Bröensted acid upon exposure to actinic radiation. Cationic photoinitiating systems which are particularly useful in the composition of the present invention are arylsulfonium salts, especially the triarylsolfonium salts for example CYRACURE UVI 6976, 6992, UNION CARBIDE; Sp-55, 150, 170, Asahi Denka) and aryl-iodonium salts (for example CGI 552, Ciba Specialty Chemicals; CD1012, SARTOMER) and metallocenes (for example IRGACURE 261, Ciba Specialty Chemicals).
The photocurable composition of the present invention may contain a thermal polymerization inhibitor for the purpose of preventing polymerization during the storage. Specific examples of the thermal polymerization inhibitor, which might be added to the photocurable composition of the present invention, include p-methoxyphenol, hydroquinone, alkyl-substituted hydroquinone, catechol, tert-butyl cathecol and phenotiazine.
The photocurable composition of the present invention may of course contain organic peroxide such as thermo polymerization initiator for the purpose of accelerating curing and allowing curing were light can not penetrate into the formulation. Specific examples of the organic peroxide include benzoyl peroxide, dicumyl peroxide, di-tert-butyl peroxide, tert-butyl peroxybenzoate, tert-butyl peroxy-2-ethylexanoate, tert-butyl peroxylaurate, tert-butyl hydroperoxide, dicumil hydroperoxide, 3,3,5-trymethylhexanoyl peroxide, diisopropyl peroxydicarbonate. In order to accelerate the curing, a cobalt salt such as cobalt naphtenate and cobalt octylate, or an amin compound such as dimethylaniline, might be used in combination with above described organic peroxide.

In a second embodiment of the invention the hardenable composition might be waterborne and solventbased Alkyd resin (e.g. Synolac, Gelkyd, Unithane, Synaqua - CRAY VALLEY; Uralac, Urathix, Uradil - DSM; Alkydal - BAYER; Laropal - BASF; Vialkyd, Daotan, Resydrols - VIANOVA), waterborne and solventbased Acrylics; waterborne, solventbased or 2-pack Epoxies, waterborne and solventbased Saturated polyesters, waterborne, solventbased or 2-pack Polyurethanes, Phenolic resins or phenolplasts.
Such hardenable compositions might be self-crosslinkable or thermosetting.

The hardenable composition of the present invention may contain filler/s for the purpose of increasing abrasion resistance and adhesion to the porosities. Specific examples of fillers include inorganic fillers such as calcium carbonate, aluminum hydroxide, calcium sulfate, barium sulfate, talc, alumina, silicon dioxide, glass powder, ceramic powder etc. and organic fillers: organic polymers such as Teflon, polystyrene resin, polyurethane resin, polyvinylacetal resin, polyvinylbutyral resin, saturated polyester resins, chlorinated polyolefin; rubber components such as butadiene rubber, styrene-butadiene rubber, nitrile rubber and acryl rubber; various type of thermoplastic elastomers such as polystyrene type, polyolefin type, polydiolefin type, polyurethane type, and polyester type; and homopolymers and copolymers of (meth)acrylic acid alkyl ester such as polyethyl(meth)acrylate and polybutyl(meth)acrylate.

The above listed compounds may be used in a form of nanoparticles.
The hardenable composition of the present invention may further contain general additives for coating materials so as to improve workability and physical properties of the formulation before and after curing. Examples of the additives include:
Adhesion promoters (for example CN704, CN736, CN9050, CN9051, ATOFINA), wetting agents, surface-active agents (for example Silwet, Silquest, CoatOSil, WITCO; BYK 3500, 3510, 3530, 3570, 310, 306, 307, 333, 341, 344, P104, 104S, 105, 220S, Lactimon, BYK Chemie), bactericides (for example IRGASAN, Ciba Speciality Chemicals), fluorinated monomers (for example 1H,1H,2H,2H-hepta-fluorodecyl-acrylate, 2-(perfluorobutyl)-ethyl acrylate, 2-(perfluorodecyl)-ethylacrylate DAIKIN; ZONYL Dupont), abrasion resistance agents (for example BYK 306, 307, 310, 333, 341, BYK Chemie), dispersing agents, viscosity modifiers
Furthermore, the hardenable composition of the present invention may contain an antioxidant, a photostabilizer or an ultraviolet absorbent for the purpose of preventing photodeterioration after curing the composition into the porosities. Examples of the antioxidants include hindered phenol type antioxidants such as 2,4,6-tri-tertbutylphenol, 2,6-di-tert-butyl-p-cresol, N,N'-hexamethylene bis(3,5-di-tert-butyl-4-hydroxy-hydrocinammide, octadecyl-3(3,5-di-tert-butyl-4-hydroxyphenyl)propionate, 3,5-di-tert-butyl-4-hydroxybenzylphosphonate-diethyl ester, isooctyl-3-(3,5-di-tert-butyl-4-hydroxyphenyl)propionate, and tris (3,5-di-tert-butyl,4,hydroxybenzyl)isocyanurate; phosphite-type antioxidants such as triphenylphosphite, tris(2,4-di-tert-butylphenyl)phosphite, tris(nonylphenyl)phosphite, di-pheninylisodecylphosphite, phenyldiisodecylphosphite, cyclic neopentane-tetrayl bis(octadecylphosphite) and 2,2-methylene bis (4,6-di-tert-butylphenol)octylphosphite; and thioether-type antioxidants such as dilauryl 3,3'-thiodipropionate, dimyristyl 3,3-thiodipropionate and pentaerythryl tetrakis(3-laurylthioproponate). Examples of the photostabilizers include hindered amine-type photostabilizers such as bis (2, 2, 6, 6-tetramethyl-4-piperidyl)sebacate, bis (1,2,2,6,6-pentamethyl-4-piperidyl)sebacate, bis (1,2,2,6,6-pentamethyl-4-piperidyl)-2-(3,5-di-tert-butyl-4-hydroxybenzyl)-2-n-butylmalonate and 4-benzoyloxy-2,2,6,6-tetramethylpiperidine.
Examples of the ultraviolet absorber include benzotriazole-type compounds such as 2-(3,5-di-tert-butyl-2-hydroxyphenyl)benzotriazole, 2-(3-tert-butyl-5-methyl-2-hydroxyphenyl)benzotriazole and 2-(3,5-di-tert-amyl-2-hydroxyphenyl)benzotriazole: benzoate-type compounds such as 2,4-di-tert-butyl-phenyl-3,5-di-tert-butyl4-hydroxybenzoate; salicylate-type compounds such as p-tert-buthylphenylsalicylate and p-octylphenylsalicylate; benzophenone-type compounds such as ethyl-2-cyano-3,3'-diphenil acrilate and 2 ethylhexyl-2-cyano-3,3'-diphenyl acrilate, and metal complexes such as nickel bis(octylphenyl)sulfide and nickel dibutyldithiocarbamate.
The hardenable composition can be applied to the material to be decorated by means of techniques used in graphic arts, such as for example offset printing, flexography, screen-printing, gravure printing, digital printing, used in coating applications such as for example roll-, film-, spray-, pallet, disk-techniques by means of a brush or vacuum technology or also hand decorations with traditional techniques (brush, pad, aerograph).
In accordance with an embodiment of the invention, a quantity of the hardenable composition ranging from 0.1 to 25 g/m² is applied to the material to be decorated, as uniformly as possible along the whole surface area.

In particular, in the case of the treatment of polished porcelain stoneware and material with reduced opened porosity, it is preferable to apply a quantity of hardenable composition ranging from 0.5 to 5 g/m² whereas when porous ceramic materials, are treated, it is preferable to apply a quantity of photo-curable composition ranging from 2 to 10 g/m².
An embodiment of the method of the invention envisages the application of the hardenable composition on the surface of the colored ceramic substrate and subsequent drying or polymerization of such hardenable resin. The hardened surface polymeric layer is then removed, for example by means of disking (with abrasives) and the treated material is then transferred to a subsequent processing phase.

According to a preferred embodiment of the method of the invention, the hardenable composition is initially applied to the decorated/colored ceramic substrate, ensuring its penetration in the surface pores and the excess surface amount applied is then removed for example using a scraper, the non-cured product being transferred for recycling. The hardenable composition is then dried/polymerized. After the polymer of said composition has hardened, the material treated is passed to other possible processing or finishing phases.

According to another embodiment of the invention, the hardenable composition is applied to the ceramic substrate and dried/polymerized. Following the curing process, a colored or decorated polymeric surface layer is formed, which is left unaltered, or optionally, removed at the moment of the laying of the material.

According to an embodiment of the invention, before the drying, it may be convenient to treat the substrate with a solution of a weak, non-aggressive acid, (for example sulfamic acid, diluted hydrochloric acid, etc.) which allows the removal of the polishing residues, for example magnesium carbonate without damaging the substrate itself. This acid treatment process allows better decorative results. The method of the invention is advantageously carried out in line with treatment operations of building materials suitable for flooring or lining, or, alternatively, in the finishing phase for third parties.

The use of the photocurable technology within the scope of the method of the invention allows an effective curing of the formulation applied.

Furthermore, the use of the photocurable technology makes the method of the invention extremely versatile enabling it to be included in the common processing procedures of ceramic materials. In the specific case of polished porcelain stoneware, it is possible to carry out the method of the invention after the smoothing phase, following possible drying treatment to eliminate the presence of residual water. The drying before the protective treatment of the material can be effected by forced hot air ventilation, with the use of an IR lamp or alternative technologies.

According to an embodiment, the method of the invention can also be used out of line, after the laying of the material itself, resorting to the use of appropriate equipment.

The use of the photocurable technology enables high drying rates, allowing a flow ranging from 1 to 200 m/min of material to be treated, enabling direct on-line production use, as the other operations such as polishing, are effected at lower rates, generally ranging from 4 to 15 m/min.

The embodiment of the method of the invention comprises the use of light sources advantageously having an emission of 100 to 780 nm, preferably with a wave-length ranging from 250 to 460 nm.
The light source, which emits ray absorbed by photoinitiator, can be used to cure the photocurable composition of the present invention. Examples of the light source include a medium pressure mercury lamp, a high pressure mercury lamp, a metal halide lamp, a excimer lamp, a short arc metal lamp, a short arc metal halide lamp, a xenon lamp, a fluorescent lamp and sunlight. When these light sources are used, the expose energy needed for curing the photocurable coating composition of the present invention is in a range from 0.05 to 1.5 J/cm², preferably in a range from 0.1 to 1.0 J/cm².
The light sources can differ depending on the type of ignition, arc or microwaves and emission spectrum, Hg or Hg doped with Ga, Ta, Pb, Fe, and other doping agents.

As an example, fluorescent lamps which can be used are fluorescent lamps TL03 or TL05 of Philips, medium pressure lamps or complete systems produced by FUSION, IST, HERAEUS, PHILIPS, AMBA, THEIMER, SYLVANIA, high pressure lamps of FUSION, IST, HERAEUS, PHILIPS, AMBA, THEIMER, SYLVANIA, excimer lamps, so-called cold lamps or monochromatic sources such as lasers.

The following examples are provided for the sole purpose of illustrating the present invention and should in no way be considered as limiting its protection scope, as defined by the enclosed claims.

Following examples are referring to application of the pigmented solution/dispersion followed by application of the hardenable resin.

### EXAMPLE 1

### Pigmented (cyan) formulation:

| | |
|---|---|
| Microlith Blue 4G-WA | 25 g |
| Water | 65 g |
| Isobutanol | 8 g |
| Dmea | 2 g |
| Let down | |
| Pigmented formulation: | 40 g |
| Water | 65 g |
| Mowiol 23-88 | 1 g |

### EXAMPLE 2

### Pigmented (cyan) formulation

| | |
|---|---|
| Microlith Blue 4G-WA | 16 g |
| 1-methoxy-2-propanol | 40 g |
| Isopropanol | 20 g |
| Ethanol | 18 g |
| Butylacetate | 4 g |
| Nitrocellulose A400 | 2 g |

### EXAMPLE 3

### Dye formulation

| | |
|---|---|
| Orasol Red BL | 2 g |
| 1-methoxy-2-propanol | 38 g |
| Isopropanol | 20 g |
| Ethanol | 10 g |
| Butylacetate | 28 g |
| Nitrocellulose A400 | 2 g |

### EXAMPLE 4

### Dye formulation

| | |
|---|---|
| Orasol Red BL | 2 g |
| 1-methoxy-2-propanol | 38 g |
| Isopropanol | 20 g |
| Ethanol | 10 g |
| Butylacetate | 28 g |
| Nitrocellulose A400 | 2 g |

### EXAMPLE 5

| Pigmented (red) formulation | |
|---|---|
| Irgasperse Red G-U | 3 g |
| 1-methoxy-2-propanol | 40 g |
| Isopropanol | 17 g |
| Ethanol | 40 g |

### EXAMPLE 6

### Photocurable formulation

| | |
|---|---|
| CN 501 | 60 g |
| TPGDA | 20 g |
| CN 104D80 | 12 g |
| IRGACURE 184 | 2 g |
| IRGACURE 819 | 0.5 g |
| TINUVIN 292 | 1 g |
| TINUVIN 400 | 1.5 g |
| Additives | 3 g |

### EXAMPLE 7

### Process

The formulations indicated in Examples 1-5 were applied by means of a pad on a substrate of white polished porcelain stoneware, washed with an acid solution (10% sulfamic acid in water) to eliminate any possible smoothing residues in the pores of the material and the surface was then cleaned with a cloth soaked in alcohol.

The pigmented/dyed formulation was completely absorbed by the material.

After drying the surface with hot air, the photo-curing formulation of Example 6 was applied by dripping it onto the substrate and applied by means of a rubber doctor blade in order to push the product into the open porosities of the material. The excess surface layer was subsequently removed with soft paper.
Following examples are referring to application of the pigmented hardenable formulation.

### EXAMPLE 8

### Pigmented (cyan) waterborne UV curable formulation:

| | |
|---|---|
| CN 132 | 50 g |
| SR 435 | 20 g |
| Water | 13 g |
| Microlith Blue 4G-WA | 10 g |
| IRGACURE 184 | 2 g |
| IRGACURE 819 | 0.5 g |
| TINUVIN 292 | 1 g |
| TINUVIN 400 | 1.5 g |
| Additives | 3 g |

### EXAMPLE 9

### Pigmented(cyan)UV curable formulation:

| | |
|---|---|
| CN 501 | 40 g |
| CN 965 | 30 g |
| TPGDA | 12 g |
| Microlith Blue 4G-A | 10 g |
| IRGACURE 184 | 2 g |
| IRGACURE 819 | 0.5 g |
| TINUVIN 292 | 1 g |
| TINUVIN 400 | 1.5 g |
| Additives | 3 g |

### EXAMPLE 10

### Pigmented(cyan)waterborne acrylics:

| | |
|---|---|
| Water | 34.11 g |
| Microlith Blue 4G-WA | 10 g |
| Wetting agent | 0.03 g |
| Silicone emulsion defoamer | 0.05 g |
| Coalescent | 0.03 g |
| Ethylene glycol | 0.03 g |
| Plasticiser | 3.50 g |
| Tributoxy ethyl phosphate | 0.03 g |
| Biocide | 0.01 g |
| Rhoplex WL-91 (Rohm and Haas) | 42.27 g |

### EXAMPLE 11

### Pigmented(cyan)waterborne acrylics:

| | |
|---|---|
| Glascol C44 | 89.9 g |
| Microlith Blue 4G-WA | 10 g |
| Wetting agent | 0.03 g |
| Silicone emulsion defoamer | 0.05 g |
| Coalescent | 0.02 g |

### EXAMPLE 12

### Pigmented (cyan) alkyds:

| | |
|---|---|
| Crodakyd 466/60 | 70 g |
| Microlith Blue 4G- A | 10 g |
| Cymel 303 | 7 g |
| Nacure 2500 | 0.6 g |
| Fluorad FC 430 | 0.6 g |
| Butyl Acetate | 11,8 6 |

### EXAMPLE 13

### Pigmented (cyan) solvent free polyurethane:

### Part A

| | |
|---|---|
| Branched polyether/polyester resin | 40 g |
| Microlith Blue 4G-A | 10 g |
| Molecular sieve zeolite paste | 0.5 g |
| Defoamer | 0.5 g |
| Barytes | 19 g |
| Part B | |
| MDI polyisocyanate | 15 g |

### EXAMPLE 14

### Process

The hardenable formulations (Examples 8-13) were applied by dripping it onto a substrate of white polished porcelain stoneware, washed with an acid solution (10% sulfamic acid in water) to eliminate any possible smoothing residues in the pores of the material and the surface was then cleaned with a cloth soaked in alcohol, and applied by means of a rubber doctor blade in order to push the product into the open porosities of the material. The excess surface layer was subsequently removed with soft paper.

The photocurable formulations were cured using a laboratory belt UV unit with the following characteristics:
- Medium pressure lamp (Hg);
- Power applied: 120 W/cm;
- Belt speed: 10 m/min.

The thermal hardenable formulations were cured using an IR lamp.

The material decorated in this way has an excellent chromatic yield with stain-proof characteristics.

### Exposure to sunlight

After 6 months of exposure to sunlight, the samples proved to have maintained their original color.

### Tread test

The samples placed in a highly tread environment, have the same coloring after 6 months.

After application, the substrate is uniformly colored and has excellent stain-proof characteristics.
In general photocurable formulations have shown best results.

## Claims

1. A method for the decoration of a porous ceramic flooring or lining material, which comprises:
1) the application of a colorant composition comprising a colorant material and a carrier on at least a portion of a ceramic flooring or lining material having surface microporosities, so as to allow said colorant composition to penetrate the pores of said ceramic flooring or lining material;
2) the application of a hardenable resin on the treated portion of the ceramic flooring or lining material
3) the polymerization or drying of said hardenable resin to fix the colorant material to the ceramic flooring or lining material,
4) the removal of the hardened surface polymeric layer.

2. The method according to claim 1, **characterized in that** said colorant material is a pigment or dye suitable for application on ceramic substrates.

3. The method according to claim 1 or 2, **characterized in that** it comprises the application of a pigment dispersed in a volatile dispersing agent.

4. The method according to any of the claims 1-3, **characterized in that** said pigment comprises a pigment selected from natural, organic, effect pigments such as metallic, metallescent, micalized pigments and their mixtures.

5. The method according to any of the claims 1-4, **characterized in that** said application phase is carried out by means of a manual technique selected from pads, brushes, aerographs, or a non-manual technique selected from flexography, screen-printing, gravure printing, digital printing, offset printing, roller coating, curtain coating, spray, vacuum.

6. The method according to any of the claims 1-5, **characterized in that** it comprises an intermediate drying phase of the dye or pigment applied.

7. The method according to any of the claims 1-6, **characterized in that** it comprises a final polishing phase of the decorated ceramic substrate.

8. The method according to any of the claims 1-7, **characterized in that** said hardenable composition is a photo-curable resin or a composition curable with ultraviolet rays (UV).

9. The method according to claim 8, **characterized in that** said hardenable composition is exposed to an electromagnetic radiation with a wavelength ranging from 100 to 780 nm.

10. The method according to any of the previous claims 8-9, **characterized in that** it comprises the application of a quantity ranging from 0,1 to 25 g/m² of said photo-curing composition on the material to be treated.

11. The method according to any of the previous claims 8-10, **characterized in that** said photo-curing composition comprises a prepolymer selected from radicalic systems, cationic systems and their mixtures.

12. The method according to claim 11, **characterized in that** said prepolymer is a radicalic system selected from the group consisting of unsaturated polyesters, epoxy acrylates, urethane acrylates, aromatic urethanes, aliphatic urethanes, polyester acrylates, polyether acrylates, acrylic acrylates and their mixtures.

13. The method according to claim 11, **characterized in that** said prepolymer is a cationic system selected from the group consisting of epoxy monomers, epoxy oligomers, polyols, vinyl-ethers, glycols and their mixtures.

14. The method according to any of the previous claims 8-13, **characterized in that** said curing composition also comprises one or more reactive diluents and/or additives selected from the group consisting of adhesion promoters, wetting agents, surface-active agents, light stabilizers, bactericides, fluorinated monomers, abrasion resistance additives, dispersing agents, viscosity modifiers, fillers, pigments, polymerization inhibitors, stabilizers.

15. The method according to any of the previous claims 8-14, **characterized in that** said curing composition comprises at least one photoinitiator.

16. The method according to claim 15, **characterized in that** said photo-initiator is selected from the group consisting of alpha-hydroxyketones, alpha-aminoketones, acylphosphinoxides, thioxantones, benzophenones, oximeesters, anthracenes, benzyl-dimethyl-ketals, benzoin ethers, amines and their mixtures.

17. The method according to any of the previous claims 1-16, **characterized in that** the application and curing phases by means of irradiation are repeated two or three times on the same ceramic substrate.

18. The method according to any of the previous claims 1-17, **characterized in that** it comprises a preliminary treatment phase of said ceramic substrate with a solution at acid pH.

19. The method according to any of claims 1-7, **characterized in that** the hardenable composition is selected from the group of waterborne and solventbased Alkyd resin, waterborne and solventbased Acrylics; waterborne, solventbased or 2-pack Epoxies, waterborne and solventbased Saturated polyesters, waterborne, solventbased or 2-pack Polyurethanes, Phenolic resins or phenolplasts and their mixtures.

20. A method for the decoration of a porous ceramic flooring or lining material, which comprises:
A) the application of a hardenable coloring composition comprising a colorant material and a hardenable resin on at least a portion of a ceramic flooring or lining material having surface microporosities, so as to allow said hardenable coloring composition to penetrate the pores of said ceramic flooring or lining material;
B) the polymerization or drying of said hardenable coloring composition to firmly fix the colorant material to the decorated ceramic flooring or lining material;
C) the removal of the hardened surface polymeric layer.

21. The method according to claim 20, **characterized in that** the hardenable composition is a photocurable resin.

22. The method according to claim 20, **characterized in that** the hardenable composition is selected from the group of waterborne and solventbased Alkyd resin , waterborne and solventbased Acrylics; waterborne, solventbased or 2-pack Epoxies, waterborne and solventbased Saturated polyesters, waterborne, solventbased or 2-pack Polyurethanes, Phenolic resins or phenolplasts and their mixtures.

## Patentansprüche

1. Verfahren zum Dekorieren von porösem, keramischem Boden- oder Wandverkleidungsmaterial, umfassend:
1) Auftragen einer Farbmittelzusammensetzung, umfassend ein Farbmittel und einen Trägerstoff auf mindestens einem Teil eines keramischen Boden- oder Wandverkleidungsmaterials mit einer mikroporösen Oberfläche, um es der Farbmittelzusammensetzung zu ermöglichen, in die Poren des keramischen Boden- oder Wandverkleidungsmaterials einzudringen;
2) Auftragen eines härtenden Harzes auf dem behandelten Teil des keramischen Boden- oder Wandverkleidungsmaterials,
3) Polymerisation oder Trocknung des härtenden Harzes, um das Farbmittel auf dem keramischen Boden- oder Wandverkleidungsmaterial zu fixieren,
4) Abtragen der gehärteten Oberflächenpolymerschicht.

2. Verfahren nach Anspruch 1, **dadurch gekennzeichnet, dass** das Farbmittel ein Pigment oder Farbstoff ist, der für das Auftragen auf keramischen Substraten geeignet ist.

3. Verfahren nach Anspruch 1 oder 2, **dadurch gekennzeichnet, dass** es das Auftragen eines in einem flüchtigen Dispersionsmittel dispergierten Pigments umfasst.

4. Verfahren nach einem beliebigen der Ansprüche 1-3, **dadurch gekennzeichnet, dass** das Pigment ein Pigment umfasst, das aus natürlichen, organischen oder Effektpigmenten wie metallischen, metallisierenden, Perlmuttpigmenten und Gemischen derselben ausgewählt ist.

5. Verfahren nach einem beliebigen der Ansprüche 1-4, **dadurch gekennzeichnet, dass** die Auftragsphase mittels manueller Techniken, ausgewählt aus Pads, Pinseln, Spritzpistolen, oder nicht-manueller Techniken, ausgewählt aus Flexodruck, Siebdruck, Tiefdruck, Digitaldruck, Offset-Druck, Walzbeschichten, Curtain-Coating, Spray, Vakuum, ausgeführt wird.

6. Verfahren nach einem beliebigen der Ansprüche 1-5, **dadurch gekennzeichnet, dass** es eine Zwischentrocknungsphase des aufgetragenen Farbstoffs oder Pigments umfasst.

7. Verfahren nach einem beliebigen der Ansprüche 1-6, **dadurch gekennzeichnet, dass** es eine abschließende Polierphase des dekorierten keramischen Substrats umfasst.

8. Verfahren nach einem beliebigen der Ansprüche 1-7, **dadurch gekennzeichnet, dass** die härtende Zusammensetzung ein lichthärtendes Harz oder eine mit Ultraviolett-Strahlen (UV) härtende Zusammensetzung ist.

9. Verfahren nach Anspruch 8, **dadurch gekennzeichnet, dass** die härtende Zusammensetzung einer elektromagnetischen Strahlung mit einer Wellenlänge von 100 bis 780 nm ausgesetzt wird.

10. Verfahren nach einem beliebigen der Ansprüche 8-9, **dadurch gekennzeichnet, dass** es das Auftragen der lichthärtenden Zusammensetzung in einer Menge zwischen 0,1 bis 25 g/m2 auf das zu behandelnde Material umfasst.

11. Verfahren nach einem beliebigen der Ansprüche 8-10, **dadurch gekennzeichnet, dass** die lichthärtende Zusammensetzung einen Vorpolymer umfasst, der aus radikalischen Systemen, kationischen Systemen und Gemischen derselben ausgewählt ist.

12. Verfahren nach Anspruch 11, **dadurch gekennzeichnet, dass** der Vorpolymer ein radikalisches System ist, das aus der Gruppe der ungesättigten Polyester, Epoxyacrylate, Urethan-Acrylate, aromatischen Urethane, aliphatischen Urethane, Polyester-Acrylate, Polyether-Acrylate, Acryl Acrylate und Gemische derselben ausgewählt ist.

13. Verfahren nach Anspruch 11, **dadurch gekennzeichnet, dass** das Vorpolymer ein kationisches System ist, das aus der Gruppe der Epoxy-Monomere, Epoxy-Oligomere, Polyole, Vinylether, Glycole und Gemische derselben ausgewählt ist.

14. Verfahren nach einem beliebigen der Ansprüche 8-13, **dadurch gekennzeichnet, dass** die härtende Zusammensetzung ferner einen oder mehrere Reaktivverdünner und/oder Zusatzstoffe umfasst, die aus der Gruppe der Haftvermittler, Netzmittel, oberflächenaktiven Stoffe, Lichtstabilisatoren, Bakterizide, fluorierten Monomere, Abrasionsschutz-Zusatzstoffe, Dispersionsmittel, Viskositätsmodifikatoren, Füllstoffe, Pigmente, Polymerisationsinhibitoren und Stabilisatoren ausgewählt sind.

15. Verfahren nach einem beliebigen der Ansprüche 8-14, **dadurch gekennzeichnet, dass** die härtende Zusammensetzung mindestens einen Photoinitiator umfasst.

16. Verfahren nach Anspruch 15, **dadurch gekennzeichnet, dass** der Photoinitiator aus der Gruppe der Alpha-Hydroxyketone, Alpha-Aminoketone, Acylphosphinoxide, Thioxanthone, Benzophenone, Oxime-Ester, Anthracene, Benzyldimethylketale, Benzoinether, Amine und Gemische derselben ausgewählt ist.

17. Verfahren nach einem beliebigen der Ansprüche 1-16, **dadurch gekennzeichnet, dass** die Phasen des Auftragens und Härtens mittels Bestrahlung auf demselben keramischen Substrat zwei- oder dreimal wiederholt werden.

18. Verfahren nach einem beliebigen der Ansprüche 1-17, **dadurch gekennzeichnet, dass** es eine Vorbehandlungsphase des keramischen Substrats mit einer Lösung mit saurem pH-Wert umfasst.

19. Verfahren nach einem beliebigen der Ansprüche 1-7, **dadurch gekennzeichnet, dass** die härtende Zusammensetzung aus der Gruppe der wässrigen und lösungsmittelbasierten Alkydharze, der wässrigen und lösungsmittelbasierten Acryle, der wässrigen, lösungsmittelbasierten oder Zweikomponentenepoxide, der wässrigen und lösungsmittelbasierten, gesättigten Polyester, der wässrigen, lösungsmittelbasierten oder Zweikomponenten-Polyurethane, der Phenolharze oder Phenolplaste und Gemische derselben ausgewählt ist.

20. Verfahren zum Dekorieren von porösem, keramischem Boden- oder Wandverkleidungsmaterial, umfassend:
A) Auftragen einer härtenden Farbmittelzusammensetzung, umfassend ein Farbmittel und ein härtendes Harz auf mindestens einem Teil eines keramischen Boden- oder Wandverkleidungsmaterials mit mikroporösen Oberflächen, um es der härtenden Farbmittelzusammensetzung zu ermöglichen, in die Poren des keramischen Boden- oder Wandverkleidungsmaterials einzudringen;
B) Polymerisation oder Trocknung der härtenden Farbmittelzusammensetzung, um das Farbmittel auf dem dekorierten keramischen Boden- oder Wandverkleidungsmaterial fest zu fixieren,
C) Abtragen der gehärteten Oberflächenpolymerschicht.

21. Verfahren nach Anspruch 20, **dadurch gekennzeichnet, dass** die härtende Zusammensetzung ein lichthärtendes Harz ist.

22. Verfahren nach Anspruch 20, **dadurch gekennzeichnet, dass** die härtende Zusammensetzung aus der Gruppe der wässrigen und lösungsmittelbasierten Alkydharze, der wässrigen und lösungsmittelbasierten Acryle, der wässrigen, lösungsmittelbasierten oder Zweikomponentenepoxide, der wässrigen und lösungsmittelbasierten, gesättigten Polyester, der wässrigen, lösungsmittelbasierten oder Zweikomponenten-Polyurethane, der Phenolharze oder Phenolplaste und Gemische derselben ausgewählt ist.

## Revendications

1. Procédé pour la décoration d'un matériau céramique poreux pour les sols ou les revêtements, qui comprend :
1) l'application d'une composition de colorant comprenant une matière colorante et une matière de base sur au moins une portion d'un matériau céramique pour les sols ou les revêtements ayant des microporosités de surface, de manière à permettre à ladite composition de colorant de pénétrer dans les pores dudit matériau céramique pour les sols ou les revêtements,
2) l'application d'une résine durcissable sur la portion traitée du matériau céramique pour les sols ou les revêtements,
3) la polymérisation ou le séchage de ladite résine durcissable pour fixer la matière colorante au matériau céramique pour les sols ou les revêtements,
4) l'élimination de la couche polymère superficielle durcie.

2. Procédé selon la revendication 1, **caractérisé en ce que** ladite matière colorante est un pigment ou colorant adapté pour l'application sur des substrats céramiques.

3. Procédé selon la revendication 1 ou 2, **caractérisé en ce qu'**il comprend l'application d'un pigment dispersé dans un agent dispersant volatile.

4. Procédé selon l'une quelconque des revendications 1 à 3, **caractérisé en ce que** ledit pigment comprend un pigment sélectionné parmi des pigments naturels, organiques, à effet, tels que des pigments métalliques, métallisés, micalisés et leurs mélanges.

5. Procédé selon l'une quelconque des revendications 1 à 4, **caractérisé en ce que** ladite phase d'application est exécutée au moyen d'une technique manuelle sélectionnée parmi des tampons, des brosses, des aérographes, ou une technique non manuelle sélectionnée parmi la flexographie, la sérigraphie, l'héliogravure, l'impression numérique, l'impression offset, le revêtement au rouleau, le revêtement par rideau, la vaporisation, le vide.

6. Procédé selon l'une quelconque des revendications 1 à 5, **caractérisé en ce qu'**il comprend une phase intermédiaire de séchage du colorant ou pigment appliqué.

7. Procédé selon l'une quelconque des revendications 1 à 6, **caractérisé en ce qu'**il comprend une phase finale de polissage du substrat céramique décoré.

8. Procédé selon l'une quelconque des revendications 1 à 7, **caractérisé en ce que** ladite composition durcissable est une résine photodurcissable ou une composition durcissable avec des rayons ultraviolets (UV).

9. Procédé selon la revendication 8, **caractérisé en ce que** ladite composition durcissable est exposée à un rayonnement électromagnétique avec une longueur d'onde comprise dans la plage de 100 à 780 nm.

10. Procédé selon l'une quelconque des revendications précédentes 8 à 9, **caractérisé en ce qu'**il comprend l'application sur le matériau à traiter d'une quantité de ladite composition photodurcissable comprise dans la plage de 0,1 à 25 g/m².

11. Procédé selon l'une quelconque des revendications précédentes 8 à 10, **caractérisé en ce que** ladite composition photodurcissable comprend un prépolymère sélectionné parmi des systèmes radicalaires, des systèmes cationiques et leurs mélanges.

12. Procédé selon la revendication 11, **caractérisé en ce que** ledit prépolymère est un système radicalaire sélectionné dans le groupe comprenant les polyesters insaturés, les acrylates époxy, les acrylates d'uréthane, les uréthanes aromatiques, les uréthanes aliphatiques, les acrylates de polyester, les acrylates de polyéther, les acrylates acryliques et leurs mélanges.

13. Procédé selon la revendication 11, **caractérisé en ce que** ledit prépolymère est un système cationique sélectionné dans le groupe comprenant les monomères époxy, les oligomères époxy, les polyols, les éthers vinyliques, les glycols et leurs mélanges.

14. Procédé selon l'une quelconque des revendications précédentes 8 à 13, **caractérisé en ce que** ladite composition thermodurcissable comprend également un ou plusieurs diluants réactifs et/ou additifs sélectionnés dans le groupe comprenant des promoteurs d'adhérence, des agents mouillants, des agents tensioactifs, stabilisants à la lumière, des bactéricides, des monomères fluorés, des additifs résistants à l'abrasion, des agents dispersants, des modificateurs de viscosité, des matières de charge, des pigments, des inhibiteurs de polymérisation, des stabilisants.

15. Procédé selon l'une quelconque des revendications précédentes 8 à 14, **caractérisé en ce que** ladite composition thermodurcissable comprend au moins un photo-initiateur.

16. Procédé selon la revendication 15, **caractérisé en ce que** ledit photo-initiateur est sélectionné dans le groupe comprenant les alpha-hydroxycétones, les alpha-aminocétones, les acylphosphinoxydes, les thioxanthones, les benzophénones, les oxime-esters, les anthracènes, les cétals diméthyliques de benzyle, les éthers de benzoïne, les amines et leurs mélanges.

17. Procédé selon l'une quelconque des revendications précédentes 1 à 16, **caractérisé en ce que** les phases d'application et de durcissement au moyen d'un rayonnement sont répétées deux ou trois fois sur le même substrat céramique.

18. Procédé selon l'une quelconque des revendications précédentes 1 à 17, **caractérisé en ce qu'**il comprend la phase de traitement préliminaire dudit substrat céramique avec une solution à pH acide.

19. Procédé selon l'une quelconque des revendications 1 à 7, **caractérisé en ce que** la composition durcissable est sélectionnée dans le groupe comprenant des résines alkydes en solution aqueuse et à base de solvant, des acryliques en solution aqueuse et à base de solvant ; des résines époxy en solution aqueuse, à base de solvant ou à deux composants, des polyesters saturés en solution aqueuse et à base de solvant, des polyuréthanes en solution aqueuse, à base de solvant ou à deux composants, des résines phénoliques ou phénoplastes et leurs mélanges.

20. Procédé pour la décoration d'un matériau céramique poreux pour les sols ou les revêtements, qui comprend :
A) l'application d'une composition colorante durcissable comprenant une matière colorante et une résine durcissable sur au moins une portion d'un matériau céramique pour les sols ou les revêtements ayant des microporosités de surface, de manière à permettre à ladite composition de colorant durcissable de pénétrer dans les pores dudit matériau céramique pour les sols ou les revêtements ;
B) la polymérisation ou le séchage de ladite composition de colorant durcissable pour fixer solidement la matière colorante au matériau céramique décoré pour les sols ou les revêtements ;
C) l'élimination de la couche polymère superficielle durcie.

21. Procédé selon la revendication 20, **caractérisé en ce que** la composition durcissable est une résine photodurcissable.

22. Procédé selon la revendication 20, **caractérisé en ce que** la composition durcissable est sélectionnée dans le groupe comprenant des résines alkydes en solution aqueuse et à base de solvant, des acryliques en solution aqueuse et à base de solvant ; des résines époxy en solution aqueuse, à base de solvant ou à deux composants, des polyesters saturés en solution aqueuse et à base de solvant, des polyuréthanes en solution aqueuse, à base de solvant ou à deux composants, des résines phénoliques ou phénoplastes et leurs mélanges.
